# EUROPEAN PATENT APPLICATION

(11) **EP 4 624 890 A1**
(43) Date of publication of application: **01.10.2025**
(21) Application number: 24165861.6
(22) Date of filing: 25.03.2024
(51) Int. Cl.: G01M 11/02

(54) **OPTICAL TESTING DEVICE AND METHOD OF OPERATING AN OPTICAL TESTING DEVICE**

(71) Applicant: Trioptics GmbH, 22880 Wedel (DE)
(72) Inventor: Hinrichs, Johannes, 22880 Wedel (DE); Duginova, Kseniia, 22880 Wedel (DE); Yadav, Mohit, 22880 Wedel (DE); Eggers, Jan-Hinrich, 22880 Wedel (DE); Krey, Stefan, 22880 Wedel (DE)
(74) Representative: Waldauf, Alexander

(57) **Abstract**

Disclosed is an optical testing device (100) having a light source (105) for emitting a light beam (110) and a beam shaping unit (115) with a diffractive optical element (DOE, 120) for shaping the light beam (110) and directing it onto a coupling-in area (125) of an optical workpiece (130) for coupling the shaped light into the optical workpiece (130) to be inspected. Furthermore, the optical testing device (100) has a workpiece holding element (135) for holding the optical workpiece (130) and a detector (145) for evaluating light (110) emerging from the coupling-out area (140) of the optical workpiece (130) in order to inspect an optical property of the workpiece (130).

## Description

The invention presented here provides an optical testing device and a method for operating an optical testing device according to the main claims.

In order to test an optical workpiece, i.e. a workpiece which is at least partially transparent to light, this workpiece can be illuminated with a light beam having a certain intensity distribution and/or wavelength and subsequently tested as to how this intensity distribution changes or a light with the certain wavelength is attenuated in order to be able to detect one or more corresponding parameters of the workpiece.

With this background, the present invention is aimed of creating an improvement with regard to the inspection of an optical workpiece.

This object is solved by the subject matter of the independent claims.

The approach described here creates an optical testing device having the following features:
- a light source for emitting a light beam;
- a beam shaping unit with a diffractive optical element for shaping the light beam and directing it onto a coupling-in area of an optical workpiece for coupling the shaped light into the optical workpiece to be inspected;
- a workpiece holding element for holding the optical workpiece;
- a detector for evaluating light emerging from the coupling-out area of the optical workpiece to inspect an optical property of the workpiece with respect to a property to be inspected.

A light source can be understood to mean, for example, a laser light source that emits a laser light beam as a light beam. For example, a beam shaping unit can be understood as a unit that shapes the light beam, in particular the laser light beam, using a diffractive optical element and outputs it to the coupling-in area of an optical workpiece. In particular, diffraction effects are used to deflect the light, which strikes this optical element at a predetermined wavelength, at a certain angle, e.g. normal incidence, and thereby in turn strikes the coupling-in area at a predetermined angle and/or range of predetermined angles, so that this shaped light propagates in a desired optical path in the optical workpiece and is coupled out again in the coupling-out area of the optical workpiece and can enter the detector. An optical workpiece can be understood here as a waveguide or a light-guide or a fiber that is designed to transmit light with desired physical properties. For example, such an optical workpiece can be used as part of data goggles, augmented reality (AR) or virtual reality (VR) display systems or near-to-eye devices (NEDs) or another optical element in which an optical function with a high optical quality is to be realized. In the detector itself, this received light is then tested with regard to a property to be examined. Such a property to be examined can be, for example, an MTF, PSF, LSF and/or an ESF parameter or other parameters such a chief ray angle (CRA)or chromatic aberrations, which can be used to assess the quality of the optical workpiece.

The detector can comprise a camera or at least two cameras or a plurality of cameras or partial detector units. The camera or the plurality of cameras can in turn comprise a telescope or a plurality of telescopes and can have fixed or variable focal length. The camera or the plurality of cameras can be realized as electronic cameras e.g. CCD or CMOS cameras. In addition, or alternatively the cameras can be realized as color-cameras. In other embodiments the detector can be realized as a conoscope or a spectrometer or a spectral photometer.

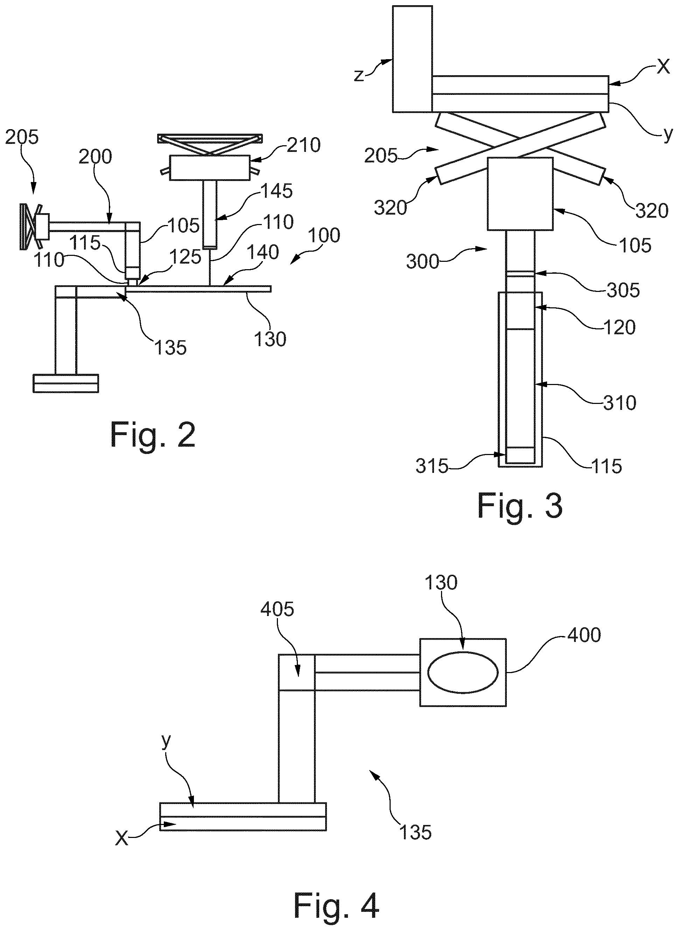

The approach presented herein is based on the realization that by using a diffractive optical element in the beam shaping unit, a specific desired deflection or shaping of the light beam can be carried out, in particular with regard to the angle under which the sample under test is illuminated, in a technically very simple and cost-effective manner, in which a parameter that is very relevant for the function of the optical workpiece can be tested simply and reliably. In the prior-art a moving or rotating the illumination unit or a plurality of illumination units is used to illuminate the sample under test under a plurality of incidence or filed angles. The publication US20220163423 outlines a measurement system for waveguides used in AR/VR devices. The systems includes a light engine comprising a light source 320 and a lens 310. In one embodiment (see Fig. 3E) the light source and lens can be rotated or tilted to adjust the angle of incidence onto the device under test 100.

A particularly favorable embodiment of the approach proposed herein is one in which the beam shaping unit is designed to actively change the optical properties of the diffractive optical element and/or to shape the light beam using a further diffractive optical element. For example, the diffractive optical element can change its shape or structure by applying or changing a voltage, so that when illuminated by the light from the light source, a different pattern or deflection of the light rays occurs than would occur without the application or change of voltage. It is also conceivable that several corresponding diffractive optical elements are provided in the beam shaping unit, which are brought into the beam path of the light source as required, so that the desired shape or deflection of the light beams that are emitted into the coupling-in area can be set by exchanging the corresponding diffractive optical elements. This allows the light to be modified quickly and easily depending on the desired application.

A particularly advantageous embodiment of the approach proposed herein is one in which the beam shaping unit is designed to project a light pattern, in particular a dot pattern or a cross pattern or a ring pattern, onto the coupling-in area by means of the diffractive optical element. Such an embodiment of the approach presented here offers the advantage of being able to test the physical effects that are relevant to the property under investigation particularly well by defining a specific light pattern and illuminate the sample under test with the specific light pattern under a predetermined set of field angles.

According to a further embodiment of the approach proposed herein the light source and/or the beam shaping unit is designed to be adjusted in at least one axis, in particular to be displaced and/or rotated about at least one axis. For example, the light source and/or the beam shaping unit can be moved vertically or laterally or can also be tilted or rotated about one or more axes. Such an embodiment offers the advantage of enabling flexible coupling of the light beam formed by the beam shaping unit into the workpiece in the coupling area due to the flexible movement of the light source and/or the beam shaping unit.

Another favorable embodiment of the approach proposed herein is one in which the workpiece holding element is designed to be adjusted in at least one axis, in particular to be displaced and/or rotated about at least one axis. Such an embodiment also enables the flexible positioning of the workpiece to be able to detect a certain property and/or a certain parameter of this workpiece with the test device presented here.

An embodiment of the approach proposed herein is also favorable, in which the workpiece holding element is designed to hold a flat-shaped optically transmissive and or reflective workpiece such as a waveguide. Where the optical workpiece to be tested comprises a coupling-in region and a coupling-out region. Such an embodiment enables the mounting and thus the testing of frequently used optical components, so that the test device presented here can be used flexibly.

Also, according to another embodiment of the approach proposed herein the detector is designed to be adjusted in at least one axis, in particular to be displaced and/or rotated about at least one axis. Such an embodiment also allows the detector to be flexibly adapted to different beam angles at which the light beams exit the coupling-out area of the optical workpiece. This makes it particularly easy to detect certain properties or parameters of the workpiece when a predetermined shaped light beam or light pattern is coupled in.

In one embodiment of the approach proposed herein the detector can comprise a camera including an image sensor and an imaging optical system such as e.g. a telescope. The camera can either have a fixed or a variable focal length. Optionally the camera can be realized as a color camera with different spectral channels. In this way it is possible to investigate wavelength-dependent properties of the optical workpiece under test.

Another advantageous embodiment of the approach proposed herein is one in which the detector comprises at least two partial detector units or cameras which are each designed to receive light which emerges from different directions from the coupling-out area, in particular wherein the at least two partial detector units or cameras are arranged adjacent to one another. Such an embodiment enables parallel measurement or recording of values or properties of the workpiece at different angles with respect to the optical axis, so that this opens an overall shorter minimum measurement duration and/or a possibility for a significantly more extensive measurement, which also includes, for example, the measurement or recording of different parameters or properties.

According to a further embodiment of the approach proposed herein the detector is adapted to be moved at least partially within a range of motion. For example, such a movement can occur along the detector's optical axis and in at least two directions perpendicular to the detector's optical axis so that the detector is aligned in different directions to the decoupling area in different positions. Such an embodiment of the approach proposed here offers the advantage of being able to pick up the light beams coupling out in different directions and evaluate them accordingly in order to be able to detect the desired property or a corresponding parameter.

The advantages mentioned above can also be implemented in the form of a process method of operating an optical testing device according to a version presented herein, the method comprising the steps of:
- outputting a light beam by the light source to the diffractive optical element of the beam shaping unit; and
- evaluating a light beam emitted from the coupling-out area of the optical workpiece to be tested to inspect the workpiece for a property to be inspected.

After passing through the diffractive optical element, the light beam can be emitted into the coupling-in area and coupled into the workpiece. In the coupling-out area, a light beam propagated through the workpiece can be recorded by the detector so that the light recorded here can be evaluated accordingly in order to detect the desired parameter or the desired property.

The approach presented herein also comprises a control device or a control unit which is designed to carry out, control or implement the steps of a variant of a method presented here in corresponding units or devices. This embodiment of the invention in the form of a control device can also solve the task underlying the invention quickly and efficiently.

For this purpose, the control device can have at least one computing unit for processing signals or data, at least one memory unit for storing signals or data, at least one interface to a sensor or an actuator for reading in sensor signals from the sensor or for outputting control signals to the actuator and/or at least one communication interface for reading in or outputting data that is embedded in a communication protocol. The computing unit can, for example, be a signal processor, a microcontroller or the like, whereby the memory unit can be a flash memory or a magnetic memory unit. The communication interface can be designed to read in or output data wirelessly and/or wired, whereby a communication interface that can read in or output wired data can, for example, read this data electrically or optically from a corresponding data transmission line or output it to a corresponding data transmission line.

In the present case, a control device can be understood to be an electrical device that processes sensor signals and outputs control and/or data signals as a function thereof. The control device can have an interface, which can be hardware and/or software-based. In the case of a hardware design, the interfaces can, for example, be part of a so-called ASIC system, which contains various functions of the control device. However, it is also possible for the interfaces to be separate integrated circuits or to consist at least partially of discrete components. In a software-based design, the interfaces can be software modules that are present on a microcontroller alongside other software modules, for example.

A computer program product or computer program with program code, which can be stored on a machine-readable carrier or storage medium such as a semiconductor memory, a hard disk memory or an optical memory and is used to carry out, implement and/or control the steps of the method according to one of the embodiments described above, is also advantageous, in particular if the program product or program is executed on a computer or a device.

At least one embodiment of the invention presented here is explained in more detail below with reference to the attached Figures. The Figures show
Fig. 1a an illustration of an embodiment of an optical testing device;
Fig. 1b an illustration of the illumination part of an optical testing device;
Fig.2 a schematic representation of an embodiment of an optical testing device;
Fig.3 a schematic representation of the light source and the beam shaping unit as illumination units for usage in an embodiment of the approach described herein;
Fig. 4 a schematic representation of the workpiece holding element for usage in an embodiment of the approach described herein;
Fig. 5 a schematic representation of the detector for usage in an embodiment of the approach described herein;
Fig. 6 a flowchart of an example of an embodiment of a method of operating an optical testing device; and
Fig. 7 a block diagram of an example of an embodiment of a control unit for operating an optical testing device.

Identical or similar elements are identified in the following description by identical or similar reference signs, whereby a repeated description of these elements is omitted.

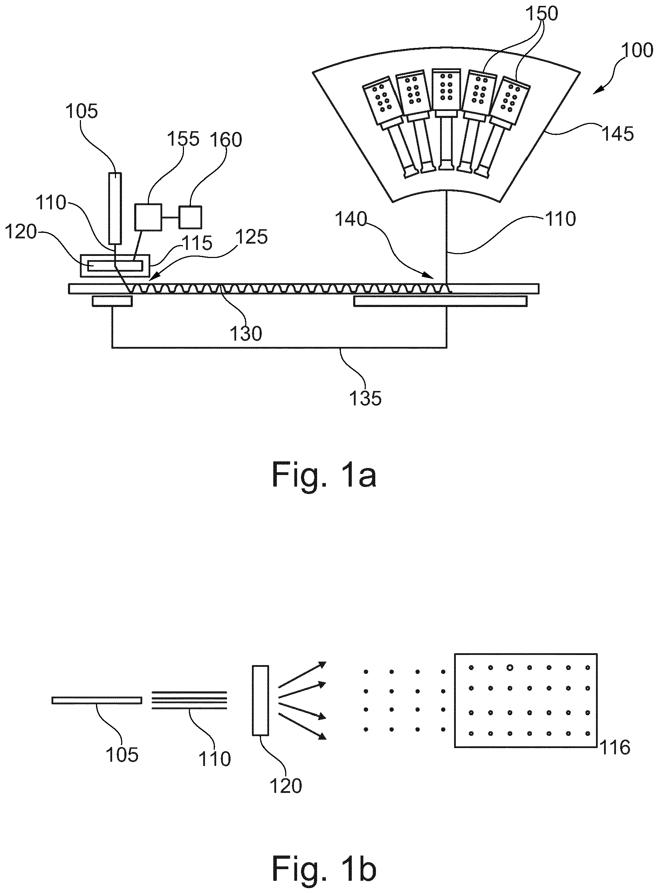

Fig. 1a shows an illustration of an embodiment of an optical testing device 100 in which a light source 105 is used, for example a laser light source in the form of laser diodes. The light source 105 can be relatively flat and small and therefore does not require much installation space. A light beam 110 is now emitted from the light source 105, which is then altered by a beam shaping unit 115. The light shaping unit 115 comprises a diffractive optical element 120, which is designed to deflect the light of the light beam 110 by diffraction effects and/or to form a light pattern therefrom, which is then coupled into an optical workpiece 130 at a coupling-in area 125, which is placed or fixed on a workpiece holding element 135, for example. The light of the light beam 110, which is now formed, can then, for example, propagate in the workpiece 130 via total internal reflection and be coupled out of the workpiece 130 in an outcoupling area 140 and received or evaluated by a detector 145. The evaluation can take place, for example, in such a way that the light is received by one and/or more partial detectors or cameras 150 and evaluated with regard to its wavelength, intensity and/or light pattern, so that by means of this evaluation and with knowledge of original parameters of the light beam 110 before or after the beam shaping unit 115, the change in this light of the light beam in the workpiece 130 can be inferred and the corresponding property, in particular the corresponding parameter of the workpiece, can then be detected or determined as a result.

The partial detectors 150 or a single sensor of the detector 145 can, for example, be arranged movably in order to be able to receive the light beam 110 emerging from the coupling-out area 140 from different directions, for example in order to be able to draw a conclusion about a corresponding propagation behavior of the light in the workpiece 130 and particularly about an optical property, such as e.g. the MTF, observed from a different field position or field angle. It is also conceivable that the sensor of the detector 145 or the partial detectors 150 are designed to detect light with different wavelengths, so that, for example, a color-dependent optical parameter, e.g. color MTF, of the workpiece 130 can also be evaluated.

It is also conceivable that the beam shaping unit 115 is designed to actively change or amend the diffractive optical element 120. This can be done, for example, by applying a voltage to the diffractive optical element 120 by means of a control unit 155, so that its diffraction properties change, thereby setting a different deflection property for the light beam 110 compared to an original deflection property. It is also conceivable that a further diffractive optical element 160 is brought into the beam path of the light beam 110 by the control unit, which then has a different deflection property than the diffractive optical element 120. This can also result in a variation of the beam shaping by the beam shaping unit 115, so that different illumination scenarios for the optical workpiece under test can be realized.

These systems for testing the optical workpiece are used to measure for example chromatic aberration or MTF/PSF/LSF/ESF or other efficiency parameters. The illumination pattern as well as angle can be easily adjusted according to the requirements of the sample.

The disclosed DOE-collimators in the prior-art are used for calibrating assembled camera systems. In these collimator-DOE combinations only the use of a dot pattern is disclosed. The measurement systems used for testing AR/VR waveguides either use mechanical displacement to change the incidence angle of light rays onto the DUT's entrance pupil or a plurality of collimators. Mechanically pivoting the light source leads to an extended measurement time and using a plurality of collimators limits the available angles of incidence. Most of the measurement system used for waveguides do not use laser illumination sources, similarly the sources do not use DOEs to create pattern for measuring different field positions.

Fig. 1b provides a detailed illustration of the illumination of the sample under test. In the embodiment shown in Fig. 1b the light source 105 emits collimated laser light 110. Light source 105 can comprise one or a plurality of laser emitters. The collimated light 110 hits the diffractive optical element 120 (DOE) and is deflected or "fanned-out" under predetermined deflection angles. Thereby the sample under test is illuminated by collimated light under a multitude of field angles. The illumination pattern 116 is a dot-shaped pattern in the embodiment described herein. Other patterns such as a cross-pattern or an annular-shaped pattern or a bow-tie shaped pattern can be realized as well.

Fig. 2 shows a schematic representation of an embodiment of an optical testing device 100, as already briefly explained, for example, in an overview representation in Fig. 1a. In contrast to the representation in Fig. 1a, it is now shown in Fig. 2 that, for example, the light source 105 together with the beam shaping unit 115 are arranged on a first holder 200, a corresponding holder mechanism 205 being formed to displace this holder 200 vertically or horizontally or to rotate it about different axes. Hereby, for example, the light source and the beam shaping unit 115 can be moved or rotated such that the light beam 110 is coupled into the workpiece 130 at a desired position and/or under a certain angle in the coupling-in region 125 and then exits the workpiece 130 again in the coupling-out region 140 to be picked up by the detector 145. The detector 145 is therefore also arranged on or attached to a detector mechanism 210, which is designed, for example, analogously to the holder mechanism 205 and can then also move the detector 145 vertically or horizontally or rotate it about different axes. In this way, the light beam 110 emerging from the decoupling area 140 can also be recorded accordingly by the detector 145 and then evaluated.

Fig. 3 shows a schematic representation of the light source 105 and the beam shaping unit 115 as illumination units 300 for usage in an embodiment of the approach described herein. It can be seen here that, in addition to the light source 105, a reticle unit 305 is provided to be able to use different illumination patterns for the measurement process. The reticle unit 305 is followed by the DOE 120. In the beam path downstream of the diffractive optical element 120 an optical system 310 is located which, for example, comprises one or more lenses and relays the light beam formed by the diffractive optical element 120 via a variable or interchangeable aperture 315 towards the sample under test. The light source 105 is attached to the holder mechanism 205, which is designed to move the light source 105 in several directions or along multiple axes, which are schematically shown here as x-, x- and z-directions. Accordingly, axes 320 are also shown about which the light source 105 can be rotated.

Fig. 4 shows a schematic representation of the workpiece holding element 135 for usage in an embodiment of the approach described herein, which comprises a holding element 400 for holding the workpiece 130. The holding element 400 can be rotated about an axis 405 and can also be moved, for example, in the x and/or y direction, as shown schematically in Fig. 4.

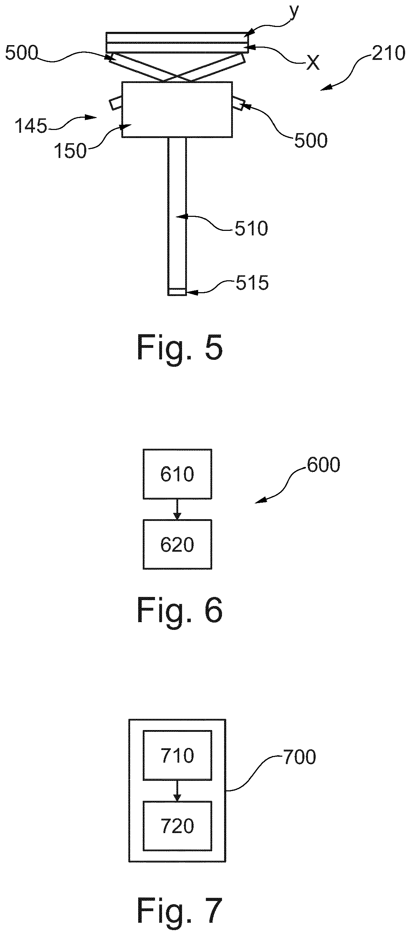

Fig. 5 shows a schematic representation of the detector 145 for usage in an embodiment of the approach described herein, which is attached to the detector mechanism 210, which also allows the detector 145 to be moved in an x-, y- and/or z-direction, whereby the movement in the z-direction is not explicitly shown in Fig. 5. The detector mechanism 210 also allows the detector 145 to be rotated in one or more axes 500 so that an optical system 510 of the detector 145 together with the aperture 515 can be moved flexibly. The movement of the detector allows e.g. to scan an Eye-Box of the sample under test. Aperture 515 can also be variable or interchangeable. One or more partial detectors 150 can then be arranged in the detector 145 itself to record or analyze and thus evaluate corresponding parameters of the received light.

Fig. 6 shows a flowchart of an example of an embodiment of a method 600 of operating an optical testing device according to a version previously described, the method 600 comprises a step 610 for outputting a light beam by the light source to the diffractive optical element (DOE) of the beam shaping unit and a step 620 of evaluating a light emitted from the coupling-out area to inspect the workpiece for a property to be inspected.

Fig. 7 shows a block diagram of an example of an embodiment of a control unit 700 for operating an optical testing device according to a version previously described, wherein the control unit 700 comprises a unit 710 for outputting a light beam by the light source to the diffractive optical element of the beam shaping unit and a unit 720 for evaluating a light emitted from the coupling-out area to inspect the desired optical properties of the workpiece under test.

In summary, it can be noted that in dies description an illumination setup with light, especially a laser and a diffractive optical element (DOE) can be included in a testing device to perform a high-quality measurement of specific parameters of an optical workpiece, especially a waveguide or light-guide for an AR/VR display system or NED.

The key aspect of the presented approach can be seen in the usage of the DOE with a light source, i.e. a laser, to illuminate an optical workpiece like a waveguide sample with TIR to measure for example the parameter MTF/PSF. The usage of a (i.e. laser) light source to illuminate the sample under test can be performed in a wide angle to cover a full field of view.

In contrast, the state-of-the-art systems for testing AV/VR optics use different types of light engines to produce a picture to test the workpiece. Some of them use LBS projectors, which do not allow to measure different optical parameters correctly or completely with light sources used in some of the systems currently on the market.

In the present idea it is proposed to exchange the LEDs by a light source, especially a laser system, with a diffractive optical element. The idea to use a combination of a light source, especially a laser, and DOE for illumination of optical elements different from cameras is a novel approach. The image formation used in measuring the MTF for example as a parameter in question, is done by the reticle put in front of the laser source. Alternatively, the aperture of the laser or the optical fiber can be used as a reticle. The lens system as well as DOE element are used to split one beam to different beams used to cover the full field of view of the sample under test i.e. the workpiece. A lens system which is for example part of the optical system is used to propagate the 1st order image of the reticle as well as 2nd, 3rd and higher diffraction order images of the reticle.

As mentioned before the system has 3 main parts:
1. Illumination part 300,
   which is a main part of the presented approach. The usage of lasers as a light source 105, a reticle with a pattern, cross, annular (ring-shaped), bowtie etc., used in measurements 305 and a diffractive optical element 120 as well as an optical system 310 used to propagate light from the laser outcoupling, i.e., the light source 105 towards the DOE 120 and then towards the entrance pupil of the sample i.e. the workpiece 130. The last part of the system is an interchangeable aperture 315 located in front of the entrance pupil of the sample. The system has a freedom of movement which allows for the movement not only in x/y/z axis, but also rotation to cover different fields of views with at least 2 rotary axes 320.
2. The sample arm,
   i.e. the workpiece holder 135, which includes sample seat 400, being customer dependent for example. The sample seat 400 allows for different types of samples or workpieces 130 to be measured in the system. The sample seat 400 also has freedom of movement in x/y/z axis as well as one rotary axis 405.
3. The detector 145
   can be any type of detector used in comparable measurement systems such as a monochrome camera to spectrometer or photodiode. Same can be true for optical system 510 attached to the detector 145, including single focusing camera with 2 degrees of FoV to conoscope (with up to 120 degrees of FoV), which will cover full field of view in one measurement. The optical system 510 also includes the interchangeable aperture 515. The detector 145 and optical system 510 can be fixed as well as have a freedom of movement in x/y/z axis by the detector mechanism 210 as well as include different rotary stages 500.

Using the optical testing device 100 proposed here several parameters can be measured by the system, which include for example MTF, CRA, focus scan, through focus measurements, relative efficiency, world side measurements, depending on the camera also color coordinates, absolute luminance; etc.

## Claims

1. Optical testing device (100) with the following features:
- a light source (105) for emitting a light beam (110);
- a beam shaping unit (115) with a diffractive optical element (120) for shaping the light beam (110) and directing it onto a coupling-in area (125) of an optical workpiece (130) for coupling the shaped light into the optical workpiece (130) to be inspected;
- a workpiece holding element (135) for holding the optical workpiece (130);
- a detector (145) for evaluating light (110) emerging from the coupling-out area (140) of the optical workpiece (130) to inspect an optical property of the workpiece (130).

2. Optical testing device (100) according to claim 1, wherein the beam shaping unit (115) is designed to change the diffractive optical element (120) and/or to shape the light beam (110) using a further diffractive optical element (160).

3. Optical testing device (100) according to one of the preceding claims, wherein the beam shaping unit (115) is designed to project a light pattern, onto the coupling-in area (125) by means of the diffractive optical element (120).

4. Optical test device (100) according to one of the preceding claims, wherein the light source (105) and the beam shaping unit (115) is designed to be adjusted in at least one axis (x, y, z, 320), in particular to be displaced and/or rotated about at least one axis (x, y, z, 320).

5. Optical testing device (100) according to one of the preceding claims, wherein the workpiece holding element (135) is designed to be adjusted in at least one axis (x, y, z, 405), particularly to be displaced and/or rotated about at least one axis (x, y, z, 405).

6. Optical testing device (100) according to one of the preceding claims, wherein the workpiece holding element (135) is designed to hold a plate- or flat-shaped optically transmissive and/or reflective workpiece (130) particularly a waveguide, comprising a coupling-in area (125) and a coupling-out area (140).

7. Optical testing device (100) according to one of the preceding claims, wherein the detector (145) is designed to be adjusted in at least one axis (x, y, z, 500), in particular to be displaced and/or rotated about at least one axis (x, y, z, 500).

8. Optical testing device (100) according to one of the preceding claims, wherein the detector (145) is designed to receive light which emerges from different directions from the coupling-out area (140) and/or which has different wavelengths.

9. Optical testing device (100) according to one of the preceding claims, wherein the detector (145) comprises at least two partial detector (150) units which are each designed to receive a light which emerges from different directions from the coupling-out area (140), in particular wherein the at least two partial detector units (150) are arranged adjacent to one another.

10. Optical testing device (100) according to any of the preceding claims, wherein the detector (145) or at least one component (150, 510) of the detector (145) is adapted to be moved at least partially within a range of motion.

11. Method (600) of operating an optical testing device (100) according to any one of the preceding claims, the method (600) comprising the steps of:
- outputting (610) a light beam (110) by the light source (105) to the diffractive optical element (120) of the beam shaping unit (115); and
- evaluating (620) a light beam emitted from the coupling-out area (140) to inspect an optical property of the workpiece (130).

12. Control unit (155, 700) adapted to control and/or execute the steps (610, 620) of the method (600) according to claim 11 in corresponding units (710, 720).

13. Computer program comprising program code adapted to control and/or execute the steps (610, 620) of the method (600) according to claim 11 when the computer program is executed on a control unit (155, 700).

14. Machine-readable storage medium on which a computer program according to claim 13 is stored.
